Europäisches Patentamt

European Patent Office

Office européen des brevets

(11) Publication number: **0 243 589 B1**

# EUROPEAN PATENT SPECIFICATION

(45) Date of publication of patent specification: **02.12.92**   (51) Int. Cl.5: **H04L 27/22**, H04L 27/00

(21) Application number: **87101416.3**

(22) Date of filing: **03.02.87**

(54) **Radio receiver with a carrier recovery control system.**

(30) Priority: **20.02.86 JP 33965/86**

(43) Date of publication of application:
**04.11.87 Bulletin 87/45**

(45) Publication of the grant of the patent:
**02.12.92 Bulletin 92/49**

(84) Designated Contracting States:
**DE FR GB IT**

(56) References cited:
**EP-A- 0 098 705**
**EP-A- 0 219 863**
**US-A- 4 423 390**

(73) Proprietor: **FUJITSU LIMITED**
**1015, Kamikodanaka Nakahara-ku**
**Kawasaki-shi Kanagawa 211(JP)**

(72) Inventor: **Miyo, Tokihiro**
**503, 473-4, Hisasue Takatsu-ku**
**Kawasaki-shi Kanagawa 213(JP)**
Inventor: **Kawasaki, Toshio**
**Fujitsu-Dainiedaryo 106 440-1, Edamachi**
**Midori-ku Yokohama-shi Kanagawa 227(JP)**

(74) Representative: **Lehn, Werner, Dipl.-Ing. et al**
**Hoffmann, Eitle & Partner Patentanwälte Ar-**
**abellastrasse 4**
**W-8000 München 81(DE)**

## Description

The present invention relates to a radio receiver which stably receives a phase modulated receiving signal.

In the satellite communication system, the PSK (Phase Shift Keying) QAM (Quadrature Amplitude Modulation) system is comparatively often employed from the point of view of transmission efficiency. In the case of demodulating the signal modulated by such modulation system, the carrier is recovered for phase detection, and when a number of modulation phases is considered as n, carrier frequency as $f_o$, clock frequency of digital signal as $f_{CL}$, the recovered carrier is pulled and stabilized at the frequency $f_o + m/n \, f_{CL}$ and the carrier may sometimes be pulled falsely by noises. Therefore, it is necessary to control the recovered carrier so that it is pulled to the optimum frequency and it is expected to form a structure where the carrier is pulled stably to the optimum frequency oven in the line condition resulting in bad signal to noise ratio.

In order to correct such false pull-in, a sweep track type phase lock loop (PLL) circuit is known, where when a phse error signal or a frequency discrimination signal sent from the demodulator is higher than the threshold level, it is judged as false pull-in and a sweep signal is applied to a control voltage of a voltage controlled oscillator for recovering the carrier signal in order to pull the carrier to the correct frequency, the pull-in range is equivalently widened by sweeping the recovered carrier frequency and sweep is stopped under the phase lock condition.

However, in the demodulator of the prior art utilizing the sweep track type phase lock loop circuit, if a high level noise is included in an input signal, it is judged as phase asynchronization and sweep is started even under the condition that the recovered carrier is locked to the optimum phase. When the sweep is started under the phase lock condition as explained above, code error characteristic is rather deteriorated.

On the other hand, in the recent satellite communication system, highly effective error correcting technique is employed and it is requested that the system can operate normally even in case a signal to noise ratio of receiving signal is 0 dB or less. This error correction technique is expected to be further developed in future and therefore the demodulator is also requested to operate stably even when a signal to noise ratio is low.

US-A-4 423 390 describes a sidelock (falselock) avoidance scheme for preventing sidelock in a PSK demodulator's carrier recovery loop contains augmenting sweep control circuitry, including a frequency discriminator and an associated window comparator. The output of the frequency discriminator, which is low pass filtered to remove noise, is applied to the window comparator which compares any differential between the true carrier and the output of a carrier recovery loop to a preset reference threshold representative of a frequency error condition that may approach sidelock. When the output of the frequency discriminator is greater than this preset reference threshold, an augmented frequency control voltage is applied to the voltage control oscillator of the loop to drive the oscillator away from a possible sidelock condition and toward the true carrier. The augmented frequency control voltage may be derived from a frequency sweep generator or from the output of the frequency discriminator, depending upon a selected strapping option.

As the noise to signal ratio becomes worse it becomes increasingly difficult to obtain a reliable signal from the frequency discriminator.

## SUMMARY OF THE INVENTION

It is an object of the present invention to realize stable demodulation by effectively judging start and stop of sweep based on the decoded code error information in the radio receiver utilizing a sweep track type phase lock loop.

The object of the invention is solved by a radio receiver which receives a digital phase-modulated radio signal and outputs a digital signal by demodulating said received signal, comprising: demodulation means for demodulating said receiving signal based on the recovered carrier and outputting a phase error signal along with the digital signal, said recovered carrier and said receiving signal; signal processing means, operatively connected to said demodulation means, for outputting code error information of said demodulated digital signal; false-lock decision or detection means, operatively connected to said signal processing means, for detecting or deciding false-lock on the basis of said code error information; sweep signal generating means, operatively connected to said false-lock decision or detecting means, for outputting a sweep signal when said false-lock detection or decision means decides or detects the false lock, adding means for adding the sweep signal sent from the sweep signal generating means to the phase error signal sent from said demodulation means, and carrier recovery means, operatively connected to said adding means, for outputting the signal having the frequency corresponding to said added signal as said recovered carrier.

The present invention controls the recovered carrier by juding start and stop of sweep of said carrier based on the error information of the decoded code, for example, the error information of error correction frequency information, error correction locking state information in the error correction circuit, quickly pulls the carrier to the optimum phase and thus realizes stable demodulation.

These together with other objects and advantages, which will be subsequently apparent, reside in the details of construction, as more fully hereinafter described and claimed, reference being had to the accompanying drawings forming a part hereof, wherein like numerals refer to like parts throughout.

BRIEF DESCRIPTION OF THE DRAWINGS

Fig. 1 is a basic function block diagram of a radio receiver of the present invention,
Fig. 2 is a function block diagram of a radio receiver as an embodiment of the present invention,
Fig. 3 is a schematic diagram for explaining the receiving signal,
Fig. 4 is a function block diagram of a radio receiver as another embodiment of the present invention,
Fig. 5 is a detail function block diagram of a phase decision circuit, and
Fig. 6 is an operation time chart of the circuit of Fig. 5.

DESCRIPTION OF THE PREFERRED EMBODIMENTS

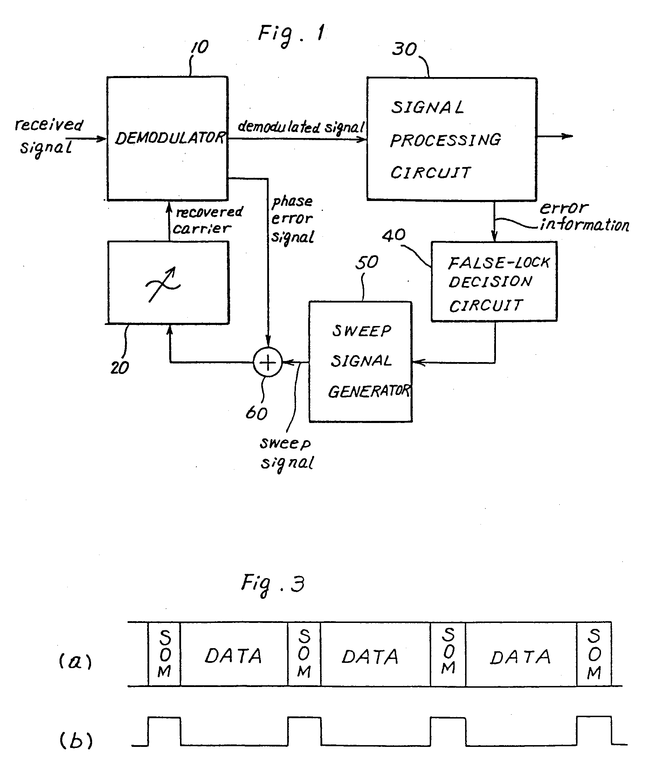

Fig. 1 is a basic function block diagram of the present invention.

A radio receiver of the present invention comprises a demodulator 10 which demodulates a receiving signal and outputs a phase error signal, a voltage controlled oscillator 20 which applies a recovered carrier based on said phase error signal to such demodulator 10, a sweep signal generator 50 which generates a sweep signal for sweeping the oscillation frequency of such voltage controlled oscillator 20, a signal processing circuit 30 which corrects code error of demodulated signal and detects such code error and a false-lock decision or detection circuit 40 which detects or decides false-lock condition based on error information obtained by the code error detection function of such signal processing circuit 30, thereby providing a control voltage to the voltage controlled oscillator 20 through an adder 60 from the phase error signal sent from the demodulator 10 and the sweep signal sent from the sweep signal generator 50.

Based on the error detection information by the code error detecting function of the signal processing circuit 30, the false-lock decision or detection circuit 40 judges start and stop of sweep and thereby controls the sweep signal generator 50. As an error detection information, an error correction frequency information obtained when the signal processing circuit 30 is used as the code error correction circuit may be used. Namely, when the recovered carrier is locked to the optimum phase, code error of demodulated signal can be reduced even if a signal to noise ratio is bad and thereby the sweep is not started, thus assuring stable demodulation.

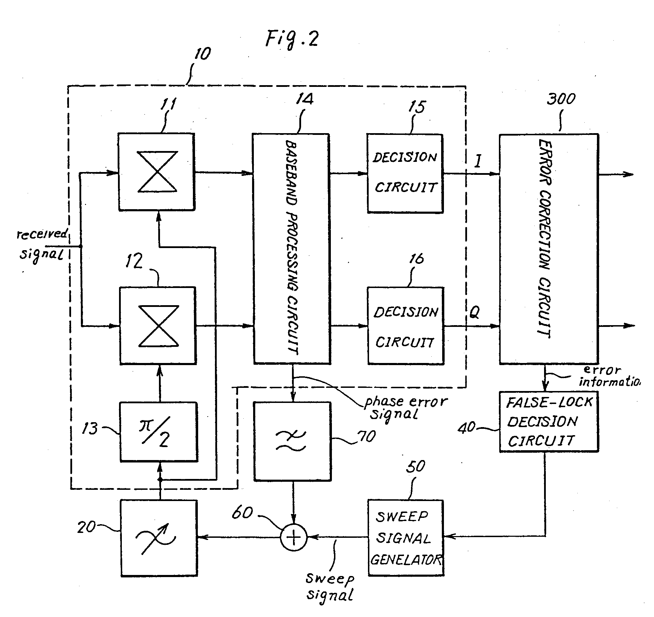

Fig. 2 is a block diagram of an embodiment of the present invention, illustrating demodulation of the 4-level phase modulated signal. In the same figure, 11, 12 are phase detectors; 20, a voltage controlled oscillator; 13, a 90°-phase shifter; 14, a baseband processing circuit employing a costas circuit; 70, a loop filter; 60, an adder; 15, 16, decision circuits; 300, an error correction circuit as an example of the signal processing circuit; 40, a false-lock decision or detection circuit; and 50, a sweep signal generator.

The recovered carriers sent from the voltage controlled oscillator 20 are applied to the phase detectors 11, 12 with a phase difference of 90° and such phases of the receiving signal are detected for demodulation. The demodulated signal is then sent to the baseband processing circuit 14, a phase error signal is sent from the loop filter 70 as the control voltage of voltage controlled oscillator 20 through the adder 60 and thereby the phase of recovered carrier is controlled, following frequency variation of the input signal.

The decision circuits 15, 16 decide levels of demodulated sigal in the decision timing and applies this signal to the error correction circuit 300, which is provides with the structure for correcting code error corresponding to the coding format such as block code or convolutional code of receiving signal and corrects the code error. Therefore, the error correction circuit 300 can be said to have the code error detecting function. For example, when the block code is used, since the redundant bit is added for error correction, it is used for error correction. Thereby, the error bit is corrected by formation of syndrome from the demodulated signal and such error correction frequency is counted for every constant period in order to form error correction frequency information.

In case such error correction frequency information shows abnormally large value, the demodulator can be decided to be in the out-of-phase condition. Such decision is made by the false-lock decision or detection circuit 40. In this case, the sweep signal generator 50 is started and the seep signal is applied to the voltage controlled oscillator 20 through the adder 60. Thereby, the frequency of recovered carrier is swept. In case the error correction frequency information shows a small value, the demodulator can be decided to be in the in-phase condition. Therefore, the false-lock decision or detection circuit 40 stops operation of the sweep signal generator 50 based on the decision thereof. Accordingly, only the phase error signal is obtained from the adder 60 through the loop filter 70 and the voltage controlled oscillator 20 is controlled, following variation of frequency of the receiving signal.

In case a convolutional code is used, a Viterbi decoder, etc. is used as the error correction circuit 300 (U.S.Patent No. 4,614,933). If a code error rate is large when a Viterbi decoder is used, an increase rate of passmetric also becomes large and since this passmetric is normalized in order to prevent overflow of an operational circuit, an error detection information can be formed by counting such normalized signal in every constant period.

The recovered carrier in such a case where the 4-phase modulated signal is demodulated has a stable point in every 90° and when it is locked to the stable point other than the optimum phase point, the demodulated sigal must be reversed or interchanged and a phase change circuit is provided for this purpose. The phase change information for controlling such phase change circuit is generated on the basis of the code error information. Therefore, it is also possible detect code errors and decide false-lock by making use of such phase change information.

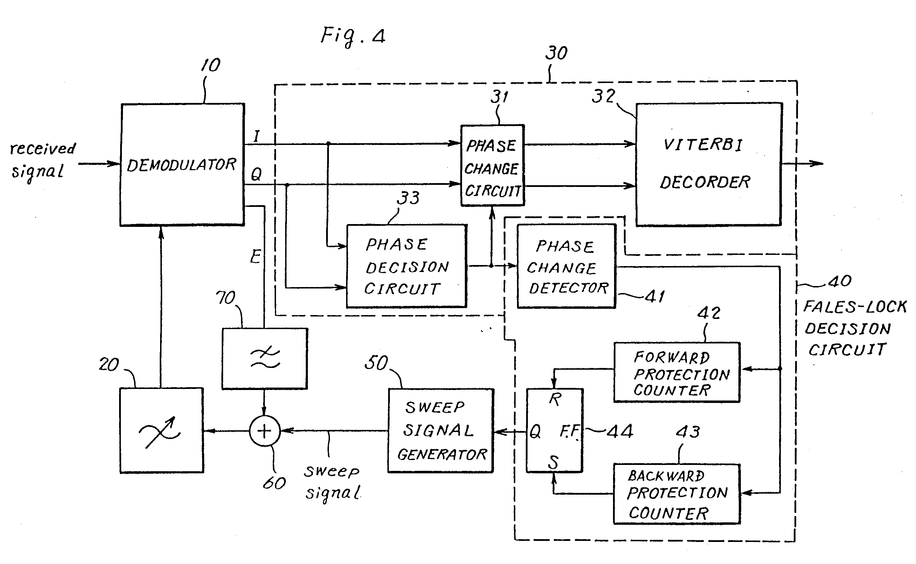

This phase change information can be formed from the correction frequency information or counting information of normalized signal in the Viterbi decoder as explained before. As shown in Fig. 3(a), a start of message (SOM) signal in the receiving signal can also be used. Namely, the start of message signal SOM is extracted from the frame timing signal shown in Fig. 3 (b) and false-lock can be decided depending on the fact whether the start of message SOM signal is correctly decoded or not.

Fig. 4 is a block diagram of the embodiment for making use of the counting information of the normalized signal in the Viterbi decoder in decision of flase-lock utilizingsaid phase change information. In this figure, 10 is a demodulator; 20, a voltage controlled oscillator; 30, a circuit comprising a Viterbi decoder and a phase change circuit as an example of the signal processing circuit; 70, a loop filter; 60, an adder; 50, a sweep signal generator; 31, phase change circuit; 32, a Viterbi decoder; 33, a phase decision circuit; 41, a phase change detector; 42, a forward protection counter; 43, a backward protection counter; 44, a flip-flop. The false-lock decision or detection circuit 40 of Fig. 2 comprises the phase change detection circuit 41, forward protection counter 42, backward protection counter 43 and the flip-flop 44.

The receiving signal is demodulated in the demodulator 10 by the recovered carrier generated from the voltage controlled oscillator 20 and thereby the demodulated data of I, Q channels can be obtained. In this case, the phase error signal E is applied as a control voltage of the voltage controlled oscillator 20 from the loop filter 70 through the adder 60 and the frequency of recovered carrier generated from the voltage controlled oscillator 20 can be controlled following frequency variations of receiving signal.

As explained above, in the case of 4-phase modulation, the stable point of recovered carrier exists at four points in every 90° within the phase range of 360°. Therefore, when the data of I,Q channels of the sending side are demodulated in the receiving side, any one of four demodulated data, 1 (I, Q), 2 (Q, $\bar{\text{I}}$), 3 ($\bar{\text{Q}}$, I), 4 ($\bar{\text{I}}$, $\bar{\text{Q}}$) can be obtained in accordance with the recovered carrier phase. Under the conditions of data 2, 3, 4, the sending signal is not received correctly. Therefore, it is decided by the phase decision circuit 38 and the I, Q channels are interchanged and data are inversed by controlling the phase change circuit 31. Thereby the demodulated signal under the condition 1 which is always demodulated by the optimum phase is input to the Viterbi decoder 32.

This phase change circuit 31 is controlled to change the phase when phase transition of recovered carrier is generated and switching is carried out frequently since the demodulated signal becomes noisy when the demodulator 10 is locked falsely. Therefore, the phase change detection circuit 41 detects change of control signal which controls the phase change circuit 31 for switching and causes the forward protection counter 42 and the backward protection counter 43 to count the detected signal.

When content of counting within a certain period is lowered exceeding the specified value, the forward protection counter 42 applies a reset signal to the reset terminal R of the flip-flop 44, while the backward protection counter 43 applies a set signal to the set terminal S of the flip-flop 44 when content of counting within a certain period is increased exceeding the specified value. An output signal of the Q terminal of this flip-flop 44 becomes the start signal of the sweep signal generator 50. In this case, it is also possible to change a count value of forward protection counter 42 for outputting the reset signal and a count value of backward protection counter 43 for outputting the set signal and in this case the respective count values are set so that desired forward and backward protection can be realized.

In the case where the phase change circuit 31 is controlled frequently for changing the phase within a constant period, since the demodulator 10 is not synchronized, the flip-flop 44 is set by the backward protection counter 43, the sweep signal generator 50 is started by the set output thereof, and the generated sweep signal is applied as a control voltage of the voltage controlled oscillator 20 through the adder 60 for sweeping frequency of the recovered carrier. When the demodulator 10 is phase-locked, since a number of times of control for changing the phase by the phase change circuit 31 within a constant period is reduced, the flip-flop 44 is reset by the forward protection counter 42, operation of the sweep signal generator 50 is stopped thereby, and the voltage controlled oscillator 20 is controlled to follow frequency variations of receiving signal.

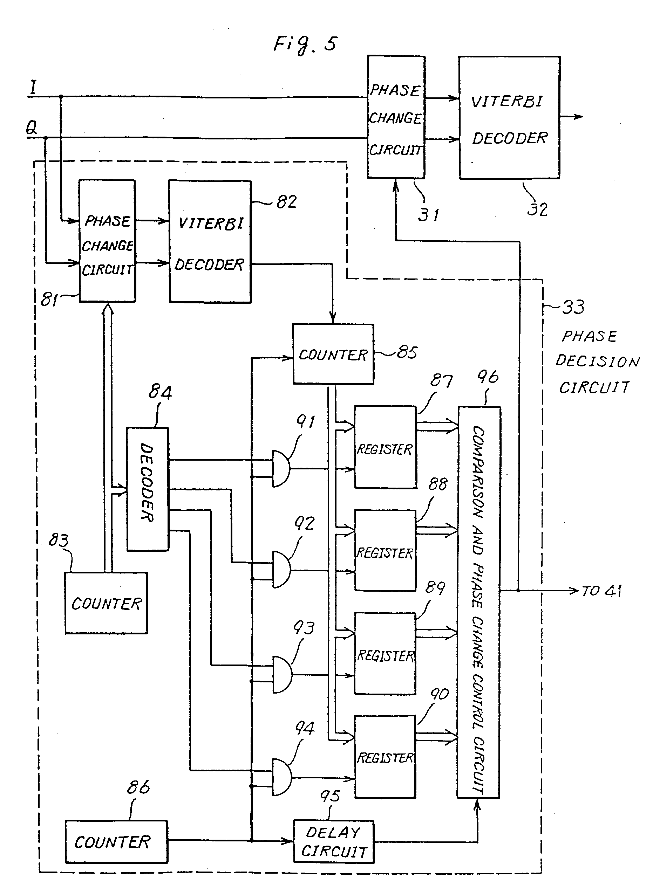

Fig. 5 is a detail function block diagram of the phase decision circuit 33. 31, 32 are phase change circuit and Viterbi decoder in Fig. 4; 81, a phase change circuit; 82, a Viterbi decoder; 83, 85, 86, counters; 84, a decoder; 87-88, registers; 91-94, AND circuits; 95, a delay circuit; 96, a comparison and phase change control circuit.

The demodulated data of I, Q channels are input to the Viterbi decoder 32 for code error correction through the phase change circuit 31 and is also input to the Viberbi decoder 82 for phase decision through the phase change circuit 81. As the counter 83, a quaternary counter is used also for the 4-phase modulated signal and combination of demodulated data of I and Q channels is changed through control by the phase change circuit 81 in every constant period and any one of the AND circuits 91 94 is selected by the decoder 84.

The counter 85 counts the lock information sent from the Viterbi decoder 46 and applies this information to the registers 87 90, the counter 86 decides the counting period of counter 85 and applies its output signal to the counter 85 as the clear signal and also applies it to the AND circuits 91-94. Such signal becomes a load signal of the registers 87-90 through the AND circuit selected by the output signal of decoder 84 and a counted value of counter 85 is set to the register where such load signal is applied.

The comparison and phase change control circuit 96 compares contents with each other of registers 87-90 with a signal having a constant period which is applied from the counter 86 through the delay circuit 95 and controls the change circuit 36, upon decision that the phase witht smallest content is a correct phase.

The lock information described above of the Viterbi decoder 46 is subjected to the normalization for preventing overflow of operational circuit, corresponding to the increment of passmetric and the signal used for such normalization is used as the lock information. For example, the normalization is carried out by under the condition that MSE is forced to become "0" when said MSB of passmetric sent from all ACS circuits (adder, comparator, selector) becomes "1" and the signal for forcing such MSB to become "0" is used as the lock information as explained above.

Since this lock information changes frequency of generation in accordance with a code error rate and therefore it is counted in every constant period by the counter 85. The demodulated data of I, Q channels are changed in every constant period in the combination of 1 (I, Q), 2 (Q, $\bar{I}$), 3 ($\bar{Q}$, I), 4 ($\bar{I}$, $\bar{Q}$) by the phase change circuit 81, corresponding to the phase stable point of the recovered carrier and are then input to the Viterbi decoder 82. In this case, a combination in such a period where a counted value of the counter 85 becomes smallest indicates the correct phase.

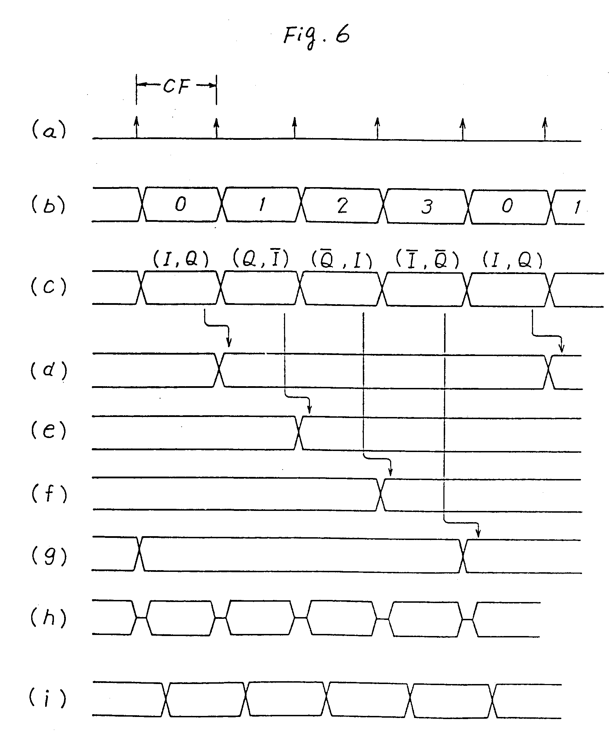

Fig. 6 is an operation time chart of the phase decision circuit, where (a) is an output signal of the counter 86 and CF represents a counting period. Moreover, (b) is an output signal of the counter 83. This counter is a quaternary counter and provides an output signals of 0-3 through the advancement in every counting period CF. (c) is a content of count of the counter 85 and (I, Q), (Q, $\bar{I}$), ($\bar{Q}$, I), ($\bar{I}$, $\bar{Q}$) indicate the combinations in every couinting period CF of 1 4 by the phase charge circuit 81. (d) (g) indicate contents of the registers 87-90 and the counted values of counter 35 are set thereto as indicated by the arrow marks. (h) is a comparison output of the regiters 87-90 in the comparison and phase change control circuit 96. Corresponding to the register having the smallest value, the change control singal (i) is output and is then applied to the phase change circuit 31 and phase chance detection circuit 41 shown in Fig. 4. The system for eliminating uncertain phase by comparing contents of registers 87-90 is called the comparison and decision system.

Moreover, a code error rate can be obtained by coding again the data decoded by the Viterbi decoder 32 into the convolutional code and then obtaining correlation with the input demodulated data. Therefore, it is also possible to control the sweep signal generator with the phase decision circuit on the basis of such code error rate.

## Claims

1. A radio receiver which receives a digital phase-modulated radio signal and outputs a digital signal by demodulating said received signal, comprising:

   demodulation means (10) for demodulating said receiving signal based on the recovered carrier and outputting a phase error signal along with the digital signal, said recovered carrier and said receiving signal;

   false-lock decision or detection means (40);

   sweep signal generating means (50), operatively connected to said false-lock decision or detecting means (40), for outputting a sweep signal when said false-lock detection or decision means (40) decides or detects the false lock;

adding means (60) for adding the sweep signal sent from the sweep signal generating means (50) to the phase error signal sent from said demodulation means (10), and

carrier recovery means (20), operatively connected to said adding means (60), for outputting the signal having the frequency corresponding to said added signal as said recovered carrier,

characterised by signal processing means (30), operatively connected to said demodulation means (10), for outputting code error information of said demodulated digital signal;

the false-lock decision or detection means (40) being operatively connected to said signal processing means (30), for detecting or deciding false-lock on the basis of said code error information .

2. A radio receiver according to claim 1, wherein said signal processing means (30) is an error correction circuit (300).

3. A radio receiver according to claim 2, wherein said error correction circuit (300) corrects error of block coded signal and outputs error correction frequency information based on syndrome as said code error information.

4. A radio receiver according to claim 2, wherein said error correction circuit (300) is a Viterbi decoder which corrects error of the signal as the convolutional code and outputs the normalized count information as said code error information.

5. A radio receiver according to claim 1, wherein said signal processing means (30) comprises a phase change circuit (31) which is controlled by the phase change signal generated by the code error information which indicates whether the SOM (start of message) is decoded correctly or not and outputs said demodulated digital signal by changing it into the digital signal in such a case where it is received in the correct phase, and said false-lock decision or detecting means (40) decides false-lock on the basis of said phase change signal.

6. A radio receiver according to claim 1, wherein said signal processing means (30) comprises; a phase decision means (33) operatively connected to said demodulation mean (10), for providing a Viterbi decoder (32) which is responsive to said demodulated digital signal and outputs a normalized signal and a outputting a phase change signal by deciding a correct receiving phase from said normalized signal, and a phase change circuit (31) operatively connected to said demodulation means (10) and phase decision means (33), for outputting said demodulated digital signal after changing it to the digital signal in such a case where it is received with a correct phase by the phase change signal sent from said phase decision means (33), and said false-lock decision means (40) decides the false-lock on the basis of said phase change signal.

**Patentansprüche**

1. Radioempfänger, der ein digitales phasen-moduliertes Radiosignal empfängt und ein digitales Signal durch Demodulieren des Empfangssignals abgibt, umfassend:

eine Demodulationseinrichtung (10) zum Demodulieren des Empfangssignals auf der Basis des wiedergewonnenen Trägers und zum Abgeben eines Phasen-Fehlersignals zusammen mit dem digitalen Signal, dem wiedergewonnenen Träger und dem Empfangssignal;

eine Fehlverriegelungsbestimmungs- oder Erfassungseinrichtung (40);

eine Wobbel-Signalerzeugungsschaltung (50), die betriebsmäßig mit der Fehlverriegelungsbestimmungs- oder Erfassungseinrichtung 40 verbunden ist, zum Abgeben eines Wobbel-Signals, wenn die Fehlverriegelungsbestimmungs- und Erfassungseinrichtung (40) die Fehlverriegelung bestimmt oder erfaßt;

eine Addiereinrichtung (60) zum Addieren des von der Wobbel-Signalerzeugungseinrichtung (50) gesendeten Wobbel-Signals Zu dem von der Demodulationseinrichtung (10) gesendeten Phasen-Fehlersignal, und

eine Träger-Wiedergewinnungseinrichtung (20), die mit der Addiereinrichtung (60) betriebsmäßig verbunden ist, zum Abgeben des Signals mit der Frequenz entsprechend dem addierten Signal als der wiedergewonne Träger,

**gekennzeichnet** durch

eine Signalverarbeitungseinrichtung (30), die betriebsmäßig mit der Demodulationseinrichtung (10) verbunden ist zum Abgeben von Code-Fehlerinformation des demodulierten digitalen Signals;

wobei die Fehlverriegelungsbestimmungs- oder Erfassungseinrichtung (40) betriebsmäßig mit der Signalverarbeitungseinrichtung (30) verbunden ist zum Erfassen oder Bestimmen einer Fehlverriegelung auf der Basis der Code-Fehlerinformation.

2.   Radioempfänger nach Anspruch 1,
dadurch **gekennzeichnet,** daß die Signalverarbeitungseinrichtung (30) eine Fehlerkorrekturschaltung (300) ist.

3.   Radioempfänger nach Anspruch 2,
dadurch **gekennzeichnet,** daß die Fehlerkorrekturschaltung (300) einen Fehler eines blockkodierten Signals korrigiert und Fehler-Korrekturfrequenzinformation auf der Basis eines Syndroms als die Code-Fehlerinformation abgibt.

4.   Radioempfänger nach Anspruch 2,
dadurch **gekennzeichnet,** daß die Fehlerkorrekturschaltung (300) ein Viterbi-Dekodierer ist, der einen Fehler des Signals als den Faltungscode korrigiert und die normalisierte Zählinformation als die Code-Fehlerinformation abgibt.

5.   Radioempfänger nach Anspruch 1,
dadurch **gekennzeichnet,** daß die Signalverarbeitungseinrichtung (30) eine Phasenänderungsschaltung (31) umfaßt, die von dem Phasenänderungssignal gesteuert wird, das von der Code-Fehlerinformation erzeugt wird, die anzeigt, ob die SOM (Start einer Mitteilung) richtig dekodiert ist oder nicht und das demodulierte digitale Signal abgibt, indem sie in das digitale Signal bei einem derartigen Fall ändert, bei dem es in der richtigen Phase empfangen wird und die Fehlverriegelungsbestimmungs- oder Erfassungseinrichtung (40) eine Fehlverriegelung auf der Basis des Phasenänderungssignals bestimmt.

6.   Radioempfänger nach Anspruch 1,
dadurch **gekennzeichnet,** daß die Signalverarbeitungseinrichtung (30) umfaßt:

eine Phasenbestimmungseinrichtung (33), die betriebsmäßig mit der Demodulationseinrichtung (10) verbunden ist, zum Bereitstellen eines Viterbi-Dekodierers (32), der auf das demodulierte digitale Signal anspricht und ein normalisiertes Signal abgibt, und zum Abgeben eines Phasenänderungssignals durch Bestimmen einer richtigen Empfangsphase aus dem normalisierten Signal, und eine Phasenänderungsschaltung (31), die betriebsmäßig mit der Demodulationseinrichtung (10) und einer Phasenbestimmungseinrichtung (33) verbunden ist zum Abgeben des demodulierten digitalen Signals, nach seiner Änderung in das digitale Signal in einem derartigen Fall, bei dem es mit einer richtigen Phase von dem von der Phasenbestimmungseinrichtung (33) gesendeten Phasenänderungssignal empfangen wird und die Fehlverriegelungsbestimmungseinrichtung (40) die Fehlverriegelung auf der Basis des Phasenänderungssignals bestimmt.

**Revendications**

1.   Récepteur radio qui reçoit un signal radio modulé en phase numérique et qui émet en sortie un signal numérique en démodulant ledit signal reçu, comprenant :

un moyen de démodulation (10) pour démoduler ledit signal de réception sur la base de la porteuse récupérée et pour émettre en sortie un signal d'erreur de phase avec le signal numérique, ladite porteuse récupérée et ledit signal de réception :

un moyen de décision ou de détection de verrouillage intempestif (40) ;

un moyen de génération de signal de balayage (50) connecté de façon opérationnelle audit moyen de décision ou de détection de verrouillage intempestif (40) pour émettre en sortie un signal de balayage lorsque ledit moyen de détection ou de décision de verrouillage intempestif (40) décide ou détecte le verrouillage intempestif ;

un moyen d'addition (60) pour ajouter le signal de balayage envoyé depuis le moyen de génération de signal de balayage (50) au signal d'erreur de phase envoyé depuis ledit moyen de démodulation (10); et

un moyen de récupération de porteuse (20) connecté de façon opérationnelle audit moyen d'addition (60) pour émettre en sortie le signal qui présente la fréquence qui correspond audit signal ajouté en tant que dit porteuse récupérée ;

caractérisé par un moyen de traitement de signal (30) connecté de façon opérationnelle audit moyen de démodulation (10) pour émettre en sortie une information d'erreur de code dudit signal numérique démodulé ;

le moyen de décision ou de détection de verrouillage intempestif (40) étant connecté de façon opérationnelle audit moyen de traitement de signal (30) pour détecter ou décider un verrouillage intempestif sur la base de ladite information d'erreur de code.

2. Récepteur radio selon la revendication 1, dans lequel ledit moyen de traitement de signal (30) est un circuit de correction d'erreur (300).

3. Récepteur radio selon la revendication 2, dans lequel ledit circuit de correction d'erreur (300) corrige une erreur d'un signal à code complet et émet en sortie une information de fréquence de correction d'erreur sur la base d'un syndrome en tant que dite information d'erreur de code.

4. Récepteur radio selon la revendication 2, dans lequel ledit circuit de correction d'erreur (300) est un décodeur Viterbi qui corrige une erreur du signal en tant que code de convolution et qui émet en sortie l'information de comptage normalisée en tant que dite information d'erreur de code.

5. Récepteur radio selon la revendication 1, dans lequel ledit moyen de traitement de signal (30) comprend un circuit de modification de phase (31) qui est commandé par le signal de modification de phase généré par l'information d'erreur de code qui indique si oui ou non le début d'un message est décodé correctement et qui émet en sortie ledit signal numérique démodulé en le changeant en signal numérique dans le cas où il est reçu selon la phase correcte et ledit moyen de décision ou de détection de verrouillage intempestif (40) décide un verrouillage intempestif sur la base dudit signal de modification de phase.

6. Récepteur radio selon la revendication 1, dans lequel ledit moyen de traitement de signal (30) comprend :
   un moyen de décision de phase (33) connecté de façon opérationnelle audit moyen de démodulation (10) pour constituer un décodeur Viterbi (32) qui est sensible audit signal numérique démodulé et qui émet en sortie un signal normalisé et pour émettre en sortie un signal de modification de phase en décidant une phase de réception correcte à partir dudit signal normalisé, et un circuit de modification de phase (31) connecté de façon opérationnelle audit moyen de démodulation (10) et au moyen de décision de phase (33) pour émettre en sortie ledit signal numérique démodulé après modification de celui-ci en signal numérique dans le cas où il est reçu avec une phase correcte au moyen du signal de modification de phase envoyé depuis ledit moyen de décision de phase (33), et ledit moyen de décision de verrouillage intempestif (40) décide le verrouillage intempestif sur la base dudit signal de modification de phase.

## Fig. 1

received signal → DEMODULATOR *(10)* → demodulated signal → SIGNAL PROCESSING CIRCUIT *(30)* →

*recovered carrier* ↑

*phase error signal*

*(20)* ⟋

*error information*

FALSE-LOCK DECISION CIRCUIT *(40)*

SWEEP SIGNAL GENERATOR *(50)*

⊕ *(60)*

*sweep signal*

## Fig. 3

(a) | S O M | DATA | S O M | DATA | S O M | DATA | S O M |

(b)

EP 0 243 589 B1

Fig.2

10

Fig. 4

Fig. 5

Fig. 6